# EUROPÄISCHE PATENTSCHRIFT

(11) **EP 0 988 179 B1**
(45) Veröffentlichungstag und Bekanntmachung des Hinweises auf die Patenterteilung: **07.11.2001**
(21) Anmeldenummer: 98932138.5
(22) Anmeldetag: 09.06.1998
(51) Int. Cl.: B60Q 3/02

(54) **INNENEINRICHTUNGSGEGENSTAND UND VERWENDUNG EINES LICHTWELLENLEITERS ALS DEKORFADEN AN SOLCHEN INNENEINRICHTUNGSGEGENSTÄNDEN**
INTERIOR DECORATING ITEM AND USE OF AN OPTICAL WAVEGUIDE AS DECORATIVE THREAD ON SUCH INTERIOR DECORATING ITEMS
OBJET D'AMENAGEMENT INTERIEUR ET UTILISATION D'UN GUIDE D'ONDES OPTIQUES COMME FILS DE DECORATION SUR DE TELS OBJETS D'AMENAGEMENT INTERIEUR

(30) Priorität: 10.06.1997 DE 19724486
(43) Veröffentlichungstag der Anmeldung: 29.03.2000
(73) Patentinhaber: Lisa Dräxlmaier GmbH, 84137 Vilsbiburg (DE)
(72) Erfinder: BAYERSDORFER, Bernhard, D-84171 Baierbach (DE)
(74) Vertreter: HOFFMANN - EITLE
(86) Internationale Anmeldenummer: EP9803449
(87) Internationale Veröffentlichungsnummer: WO9856615

(56) Entgegenhaltungen:
- WO-A-97/18105
- FR-A- 2 620 396
- US-A- 5 206 562
- US-A- 5 647 658
- PATENT ABSTRACTS OF JAPAN vol. 014, no. 250 (C-0723), 29. Mai 1990 & JP 02 068307 A (TAKARA CO LTD), 7. März 1990

## Beschreibung

### Technisches Gebiet

Die Erfindung betrifft Inneneinrichtungsgegenstände für beispielsweise ein Kraftfahrzeug oder Flugzeug, insbesondere ein Kraftfahrzeug- oder Flugzeugsitz, eine Instrumentenkonsole, Fahrzeugtürinnenverkleidung, an denen Lichteffekte erzeugt werden. Ferner betrifft die Erfindung die Verwendung eines zumindest über einen Teil seiner Länge sichtbares Licht emittierenden Lichtwellenleiters als Dekorfaden zur Erzeugung von Lichteffekten an solchen Inneneinrichtungsgegenständen.

### Stand der Technik

Es ist bereits bekannt, die Beleuchtung von Konturen mit Lichtwellenleitern im Innenraum von Kraftfahrzeugen vorzunehmen. Beispielsweise ist in einem Sitzschalter, der in einem Serienfahrzeug der Firma Mercedes Benz AG verbaut ist, die Beleuchtung der Sitzschalterkontur mit Hilfe eines Lichtwellenleiters realisiert. Diese bekannte Konturbeleuchtung ist derart aufgebaut, daß der Lichtwellenleiter selbst nicht sichtbar ist, sondern hinter dem Bedienerpanel liegt, das an der zu beleuchtenden Kontur lichtdurchlässig ausgebildet ist. Damit wird der Lichtwellenleiter durch das teilweise lichtdurchlässig ausgebildete Bedienerpanel vor Berührung und Abnützung geschützt.

Als Lichtwellenleiter kommen hauptsächlich hierfür handelsübliche PMMA-Fasern (Polymethylmethacrylat) zum Einsatz.

Diese Fasern weisen je nach Länge der zu beleuchtenden Kontur einen Durchmesser von 0,2 bis 3,0 mm auf. Die PMMA-Fasern werden mit einem zusätzlichen Schutzmantel auch in der Automobilindustrie zur Datenübertragung verwendet. Der Vorteil derartiger Kunststoffasern gegenüber Glasfasern liegt in der unproblematischen Bearbeitung und in der hohen Elastizität bei den hier verwendeten dickeren Fasern. Die hohe Elastizität ist notwendig, damit auch kleinere Biegeradien der zu beleuchtenden Kontur möglich sind.

Die Lichteinspeisung erfolgt an den beiden Enden der Lichtleitfaser mit Leuchtdioden (LED). Um bei einer Länge von ca. 0,5 m auch in der Mitte der Kontur noch genügend Intensität zu erhalten, ist ein Faserdurchmesser von etwa 1,5 mm notwendig. Noch dickere Fasern wirken für eine Konturbeleuchtung jedoch zu klobig.

Des weiteren ist für eine konstante Helligkeit entlang der Kontur eine maschinelle Bearbeitung der Oberfläche der Lichtleitfaser notwendig. Dies ist jedoch ein gängiges Verfahren, das von verschiedenen Firmen beherrscht wird. Dabei wird je nach dem im Bereich der Lichtleitfaser gewünschten Biegeradius deren Oberfläche unterschiedlich behandelt. Grundsätzlich ist hierzu anzuführen, daß je enger der Biegeradius ist, desto größer ist bereits die an sich in der Lichtleitfaser per se vorhandene Lichtstreuung an der Oberfläche, so daß dort eine geringere oder gar keine Oberflächenbehandlung notwendig ist. Auf gerade verlaufenden Strecken der Lichtleitfaser muß jedoch die Oberfläche speziell behandelt werden, damit auf dieser Strecke ausreichend Licht nach außen emittiert wird.

Zur Befestigung derartiger Lichtwellenleiter zu diesem Verwendungszweck sind bei der bekannten Sitzschalterkonturbeleuchtung Klipse (Klammern) an das Panel mit angespritzt. Das heißt, der Lichtwellenleiter wird in die Halteklipse eingedrückt, so daß er dort fest sitzt.

Zur Erzielung spezieller designtechnischer Ausgestaltungen - allgemein Lichteffekte an Gegenständen - an der Oberfläche eines Innenausstattungsteils, wie beispielsweise eines Kraftfahrzeuges und insbesondere einer Randkontur eines solchen Ausstattungsteils, ist eine derartige Befestigung jedoch problematisch. Zum einen ist es an sich aus designtechnischen Gründen oftmals unerwünscht, daß Befestigungsklipse sichtbar sind. Zum anderen ist der Lichtwellenleiter bei der bekannten Einrichtung vor direkter Berührung nicht geschützt und unterliegt verschiedensten Umwelteinflüssen, wie beispielsweise Feuchtigkeit, scharfe Putzlösungsmittel und dergleichen. Derartige Umwelteinflüsse können aber insbesondere bei einem Einsatz in einem Kraftfahrzeug möglicherweise die gewünschte Funktion des Lichtwellenleiters stark beeinträchtigen.

Auf einem völlig anderen Fachgebiet - und zwar der Herstellung von Heißluftballons - wurde bereits das Problem der Führung und Befestigung eines Lichtwellenleiters entlang größerer Weglängen behandelt. In der DE 93 18 356.9 U1 ist eine Vorrichtung zur Führung und Befestigung eines Lichtwellenleiters an der Außenhaut eines Heißluftballons gezeigt. Bei der hieraus bekannten Vorrichtung ist. der Lichtwellenleiter in einem Gewebeschlauch mit großem Querschnitt angeordnet. Der Gewebeschlauch selbst ist mit einer Naht mit der Außenhaut des Heißluftballons vernäht. Der Gewebeschlauch soll einen Schutz gegen Beschädigung sowie gegen die von der Hülle ausgehenden Hitze bieten. Hierfür ist der Gewebeschlauch an der Außenseite frei umströmbar ausgebildet. Ferner ist die Innenquerschnittsfläche des Gewebeschlauches weitaus größer als die des Lichtwellenleiter. Dementsprechend kann sich der Lichtwellenleiter im Gewebeschlauch frei bewegen, damit sich beim Zusammenfalten der Ballonhülle der Lichtwellenleiter im Gewebeschlauch frei bewegen kann und nicht durch Knicken beschädigt wird.

Aus der DE 43 15 645 A1 ist eine Anzeigeeinrichtung mit einem Lichtwellenleiter bekannt. Der Lichtwellenleiter dient aber lediglich dazu, an einem Ende des Lichtwellenleiters einfallendes Streulicht (hier bei offenstehendem Kofferraum einfallendes Umgebungslicht) zum Fahrzeug-Cockpit weiterzuleiten, wo der Lichtwellenleiter sozusagen als "Kontrollämpchen" dient. Damit wird der Lichtwellenleiter in der üblichen Weise eingesetzt, Licht von einer Stelle zu einer anderen zu leiten.

In der DE 18 05 911 U ist ein elastisches Klemmband zum Befestigen von Leitungen und Kabeln gezeigt. Dieses Klemmband wird abschnittsweise um die zu montierende Leitung geschlungen. Gemäß dem Hauptzweck des Klemmbands, nämlich elektrische Leitungen in Kraftfahrzeugen zu befestigen, erfolgt eine Anbringung sicherlich so, daß die Leitungen mit den abschnittsweise angebrachten Klemmbändern von außen nicht sichtbar sind.

### Darstellung der Erfindung

Das der Erfindung zugrundeliegende technische Problem besteht darin, neue lichttechnische Effekte an einem Inneneinrichtungsgegenstand zur Hervorhebung von irgendwie gearteten Konturen zu ermöglichen.

Dieses technische Problem wird durch einen Inneneinrichtungsgegenstand in beispielsweise einem Kraftfahrzeug oder Flugzeug mit den Merkmalen des Anspruchs 1, 2 oder 3 gelöst. Auch die Verwendung gemäß dem Anspruch 12 löst das der Erfindung zugrundeliegende technische Problem. Die Befestigungseinrichtung des Inneneinrichtungsgegenstands gemäß dem Anspruch 1 zeichnet sich dadurch aus, daß sie den Lichtwellenleiter in einem ein lichtdurchlässigen Hohlteil bildenden Materialstreifen der Befestigungseinrichtung hält und, im Querschnitt gesehen, ein sich von dem Hohlteil weg erstreckendes, als Befestigungsfahne dienendes Streifenteil aufweist, mit dem der im Hohlteil gehaltene Lichtwellenleiter am Inneneinrichtungsgegenstand angebracht ist.

Diese Befestigungseinrichtung ermöglicht somit erstmals, daß zumindest über einen Teil der Länge des Lichtwellenleiters emittiertes, sichtbares Licht von einer im Fahrzeug oder Flugzeug sitzenden Person erkennbar ist, und zwar auch an den Lichtwellenleiterabschnitten, an denen eine Befestigung erfolgt. Zudem wird mit einer derartigen Befestigungseinrichtung zweierlei erreicht. Zum einen schafft der den Lichtwellenleiter umschließende Hohlteil des Materialstreifens einen Schutz vor direkter Berührung des Lichtwellenleiters, zum anderen wird gleichzeitig eine Befestigungsmöglichkeit mittels der Befestigungsfahne geschaffen. Die Befestigungsfahne kann somit in an sich bekannter Weise vernäht, eingeklemmt oder verklebt werden.

Vorteilhafterweise ist der Lichtwellenleiter von dem gebildeten Hohlteil des Materialstreifens in seiner Längserstreckung durchgehend ummantelt, um so eine optimale Führung für den Lichtwellenleiter und einen optimalen Schutz des Lichtwellenleiters zu realisieren.

Die Befestigungseinrichtung an sich kann grundsätzlich aus einem biegsamen Materialstreifen, wie vorteilhafterweise einer transparenten Folie oder einem Gewebe- oder Fasergeflecht, gebildet werden. Andererseits ist es jedoch genauso möglich, den Materialstreifen als einstückiges, in gewissem Maße flexibles Kunststoff-Spritzgießteil auszubilden, bei dem das Hohlteil und die Befestigungsfahne in einem Spritz- oder Stranggießverfahren hergestellt werden.

Bei der biegsamen Materialstreifenausbildung kann in einfachster Weise der Lichtwellenleiter in Längsrichtung des Streifens eingelegt werden. Nachfolgend wird dann der Materialstreifen umgefaltet und in vorteilhafter Weise durch Verschweißung oder Verklebung in Längsrichtung der Lichtwellenleiter im dadurch gebildeten Hohlteil eingeklemmt.

In einer günstigen Ausgestaltung wird eine transparente Klebefolie als Materialstreifen verwendet. Dadurch ist der Materialstreifen auch mit dem Lichtwellenleiter selbst verklebt, so daß sich der Materialstreifen nicht relativ zum Lichtwellenleiter in sich selbst zusammenschieben kann, was das ästhetische Erscheinungsbild beeinträchtigen würde. Andererseits kann es auch zweckmäßig sein, eine gewisse Längsverschiebbarkeit des Lichtwellenleiters im gebildeten Hohlteil der Befestigungseinrichtung vorzusehen, um damit die Realisierung von Konturverläufen mit unterschiedlichen Krümmungen und Radien zu erleichtern. Diese Längsverschiebbarkeit des Lichtwellenleiters in der Befestigungseinrichtung kann etwa mit den oben erwähnten einstückigen Kunststoff-Spritzgießteilen ode den oben erwähnten, in Längsrichtung verklebten oder verschweißten Materialstreifen erhalten werden.

Eine derartige Befestigungseinrichtung kann problemlos in bekannter Weise wie ein Randverstärkungskeder - d.h. ein Randverstärkungswulst beispielsweise an Fahrzeugsitzpolstern - an der Befestigungsfahne integriert in eine an sich vorgesehene Naht mit eingenäht werden.

Aufgrund der für den vorliegenden Einsatzzweck hervorragenden Eigenschaften ist insbesondere als Lichtwellenleiter eine PMMA-Faser mit einem Durchmesser zwischen 0,2 bis 3,0 mm vorteilhaft.

Im Hinblick auf die Materialien für einen bei der Erfindung verwendbaren Lichtwellenleiter wird insbesondere auf die bereits zuvor genannte DE 43 15 645 A1 verwiesen. So ist hierin beispielhaft erläutert, daß einzelne Glas- oder Kunststoffasern mit einem Kern und einem Mantel grundsätzlich als Lichtwellenleiter in Frage kommen. Ausdrücklich wird auf bekannte Materialien zurückgegriffen, wie dünne runde Fasern aus Quarzglas mit Außendurchmessern bis etwa 150 *µ*m oder auch aus Kunststoff mit Durchmessern von etwa 1 mm. Im weiteren werden Stufenprofil-Lichtwellenleiter, d.h. Ein-Moden- oder Mehrmodenlichtwellenleiter, als auch Gradientenlichtleiter erwähnt. Überdies ist angeführt, daß Lichtwellenleiter optisch als auch mechanisch relativ empfindlich sind, so daß es vorteilhaft ist, Lichtwellenleiter mit einer Schutzhülle zu verwenden. Die Schutzhülle wird bekanntermaßen aber durch ein Beschichtungsverfahren der Lichtwellenleiter erzielt. Alle hier erläuterten Arten von Lichtwellenleiter sind grundsätzlich für eine erfindungsgemäße Verwendung zur Erzielung von speziellen Lichteffekten geeignet.

Hinsichtlich der Einspeisung von Licht wird beispielhaft auf die EP 0 515 921 A2 verwiesen. Dort ist eine Innenleuchte für Kraftfahrzeuge erläutert, die in einem Halte- oder Türgriff eingesetzt ist. In dem Zwischenstück des Haltegriffes ist ein Lichtwellenleiter angeordnet, der mit seiner einer Glühlampe zugewandten Stirnfläche in etwa im Brennort eines Reflektors oder einer Linse liegt und der auf der der Lichtaustrittsrichtung abgewandten Längsseite mit Reflexionsmitteln versehen ist. Diese beispielhaften Einspeisungsmöglichkeiten sind auch bei der vorliegenden Erfindung anwendbar.

Grundsätzlich ist aber auch bereits das Übernähen eines Lichtwellenleiters zur Befestigung desselben ausreichend, um neue lichttechnische Effekte an Oberflächen von irgendwie gearteten Inneneinrichtungsgegenständen zu ermöglichen. Dabei wird natürlich zumindest an einem Ende des Lichtwellenleiters Licht mittels einer Lichteinspeiseinrichtung eingespeist. Diese Ausführungsform entspricht der des Anspruchs 2.

Ohne weitere Befestigungsmittel sind lichttechnische Effekte entsprechend der vorgenannten Art bereits dadurch möglich, daß eine dünne Lichtfaser selbst als Dekorfaden in Inneneinrichtungsgegenstände eingenäht ist, und zumindest an einem Ende des Lichtwellenleiters Licht mittels einer Lichteinspeiseinrichtung eingespeist wird.

Im übrigen können selbstverständlich verschiedenste Farbeffekte bei der erfindungsgemäßen Befestigung wie auch bei der Verwendung und den beschriebenen Verfahren zur Erzeugung von speziellen Lichteffekten dadurch ermöglicht werden, daß farbige Kunststoffolien oder Materialien für eine erfindungsgemäße Befestigungseinrichtung verwendet werden. Es könnte aber auch daran gedacht werden, den Lichtleiter selbst farbig auszugestalten.

### Kurze Beschreibung der Zeichnungen

Im folgenden sind zur weiteren Erläuterung und zum besseren Verständnis mehrere Ausführungsbeispiele der Erfindung unter Bezugnahme zu den beigefügten Zeichnungen näher beschrieben und erläutert. Es zeigt:
- Fig. 1: eine perspektivische Ansicht auf eine erfindungsgemäße Befestigungseinrichtung mit in dessen Hohlteil eingeschobenen Lichtwellenleiter,
- Fig. 2: eine Querschnittsansicht durch eine Trägeranordnung mit darauf befindlichen Bezugteilen, in deren Verbindungsnaht eine erfindungsgemäße Befestigungseinrichtung mit eingeschobenem Lichtwellenleiter mit integriert ist,
- Fig. 3: eine schematische perspektivische Ansicht, die eine weitere Befestigungsmöglichkeit einer erfindungsgemäßen Befestigungseinrichtung für einen Lichtwellenleiter mittels einer Klemmleiste zeigt,
- Fig. 4: eine weitere Ausführungsform einer Befestigungsmöglichkeit eines Lichtwellenleiters in einer Ausnehmung eines Trägerteils, das mit Bezugteilen kaschiert ist, und
- Fig. 5: eine Draufsicht auf die schematische Darstellung der Befestigung einer Lichtleitfaser gemäß der Fig. 4.

### Beschreibung von Ausführungsbeispielen der Erfindung

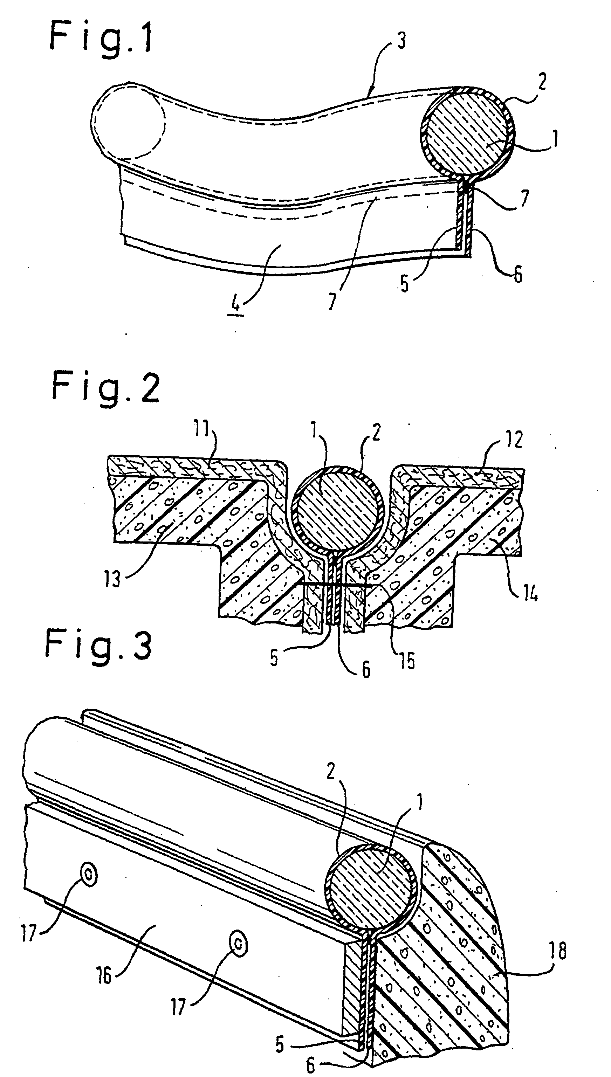

Unter Bezugnahme zu den Fig. 1 bis 3 wird eine erste Ausführungsform einer Befestigungseinrichtung für einen Lichtwellenleiter näher erläutert. Wie in der Fig. 1 sehr gut ersichtlich ist, ist ein länglicher Materialstreifen 3 aus einer Kunststoffolie um einen Lichtwellenleiter 1 herumgelegt. Zur Bildung eines Hohlteils 2, in dem der Lichtwellenleiter 1 liegt, sind Überstände 5, 6 an einer Verbindungslinie 7 miteinander verschweißt. Es ist somit eine Befestigungsfahne 4 durch die Überstände 5, 6 der Folie geschaffen.

Der Lichtwellenleiter 1 ist im Hohlteil 2 der Kunststoffolie eingeklemmt, kann jedoch noch in Längsrichtung des Hohlteils 2 verschoben werden.

In der Fig. 2 ist eine beispielhafte Befestigung der Befestigungseinrichtung gemäß der Fig. 1 im Querschnitt gezeigt. Zwei aufeinander stoßende Trägerteile 13, 14, die beispielsweise Bestandteile einer Instrumentenkonsole sind, sind jeweils mit Bezugteilen 11, 12 kaschiert. In luxuriöseren Inneneinrichtungen bestehen die Bezugteile 11, 12 aus Leder.

Die Trägerteile 13, 14 mit den jeweils aufkaschierten Bezugteilen 11, 12 weisen an ihren Stoßstellen eine in etwa halbkreisförmige Rillennut auf, die leicht größer ist als der Durchmesser eines Lichtwellenleiters 1. Der in einer Befestigungseinrichtung gemäß der Fig. 1 eingeschobene Lichtwellenleiter 1 ist an der Befestigungsfahne 4 in die Nahtverbindung 15 der Bezugteile 11, 12 integriert. Das heißt, der Lichtwellenleiter 1 ist in geschützter Weise nach außen hin in etwa ebenflächig in die Oberfläche der Trägerteile 13, 14 mit den darauf aufkaschierten Bezugteilen 11, 12 integriert. Auch wenn anstelle aneinanderstoßender Trägerteile 13, 14 ein durchgehendes Trägerteil mit einer entsprechenden Aufnahmenut vorliegt, kann die Befestigungsfahne mit eingeschobenem Lichtwellenleiter in die Nahtverbindung 15 der Bezugteile 11, 12 integriert werden.

Eine andere Befestigungsmöglichkeit für einen Lichtwellenleiter in einer Befestigungseinrichtung gemäß der Fig. 1 ist in der Fig. 3 gezeigt. Dort ist in beispielhafter Weise ein Türtaschen-Außenteil 18 am oberen Randbereich in etwa viertelkreisförmig ausgenommen. Die Ausnehmung entspricht in etwa dem Außendurchmesser des Lichtwellenleiters 1 mit darum gewickelter Folie. Nachdem die Befestigungseinrichtung gemäß der Fig. 1 mit dem darin eingeschobenen Lichtwellenleiter 1 in die viertelkreisförmige Ausnehmung angelegt ist, wird eine Klemmleiste 16 so auf die Innenseite des Türtaschen-Außenteils 18 angelegt, daß die Befestigungsfahne, die durch die Überstände 5, 6 der Kunststoffolie gebildet ist, zwischen Türtaschen-Außenteil 18 und der Klemmleiste 16 eingeklemmt ist. Die Fixierung erfolgt dann mittels Befestigungsstiften 17. Damit ist eine sichere Halterung des Lichtwellenleiters 1 am Türtaschen-Außenteil 18 erzielt.

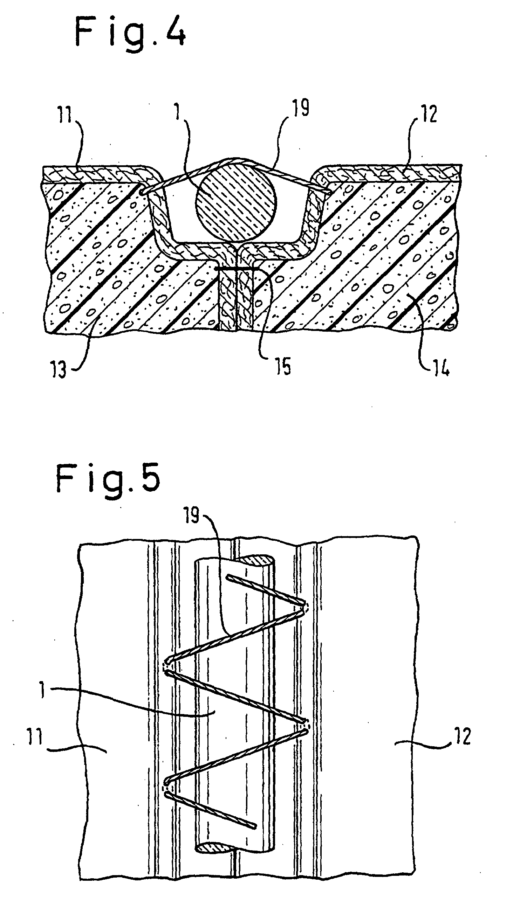

Eine grundsätzlich andere Befestigungsart für einen Lichtwellenleiter 1 ist in der schematischen Querschnittsansicht gemäß der Fig. 4 gezeigt. Der grundsätzliche Aufbau aus Trägerteilen 13, 14 und darauf aufkaschierten Bezugteilen 11, 12 entspricht dem der Fig. 2. In der hier gezeigten Befestigungsart für einen Lichtwellenleiter 1 ist jedoch der Lichtwellenleiter 1 mittels eines auf einer Seite des Lichtwellenleiters 1 beispielsweise im Zick-Zack hin- und herlaufenden Fadens 19 in der Nut festgehalten. Der Verlauf des Fadens 19 ist insbesondere in Draufsicht aus der Fig. 5 gut ersichtlich. Damit wird der Lichtwellenleiter 1 wiederum in eine Oberfläche integriert gehalten.

Allen Ausführungsformen gemäß der Fig. 1 bis 5 ist gemein, daß zumindest an einem Ende die Einkoppelung von Licht über eine Leuchtdiode (LED) oder eine Laserdiode erfolgt. Bei größeren Längen des Lichtwellenleiters 1 erfolgt eine Einspeisung von Licht an beiden Enden des Lichtwellenleiters 1. Damit wird dann eine gleichmäßige Helligkeit über die gesamte Länge des Lichtwellenleiters 1 erzielt. Die Einspeisung und die dafür notwendigen Mittel entsprechen dem Stand der Technik. Somit wird hierzu nicht ausdrücklich Stellung genommen.

Eine zwar hier nicht dargestellte, aber noch erwähnenswerte Ausführungsform zur Erzielung von speziellen Lichteffekten an einer Oberfläche mittels eines Lichtwellenleiters ist dadurch gegeben, daß der Lichtwellenleiter selbst wie ein Faden in Bezugteilen 11, 12 hin- und her verlaufend geführt wird, wodurch er durch die Einbeziehung als Faden in die Bezugteile 11, 12 an der Oberfläche fixiert ist.

## Patentansprüche

1. Inneneinrichtungsgegenstand, wie beispielsweise ein Kraftfahrzeug- oder Flugzeugsitz, eine Instrumentenkonsole, eine Fahrzeugtür-Innenverkleidung oder dgl., der einen zumindest über einen Teil seiner Länge sichtbares Licht emittierenden Lichtwellenleiter (1) in einer Befestigungseinrichtung (2, 3) befestigt aufweist, wobei sich der Lichtwellenleiter (1) in einem ein lichtdurchlässiges Hohlteil (2) bildenden Materialstreifen (3) der Befestigungseinrichtung befindet und die Befestigungseinrichtung, im Querschnitt gesehen, ein sich von dem Hohlteil (2) weg erstreckendes, als Befestigungsfahne (4) dienendes Streifenteil aufweist, mit dem der im Hohlteil (2) gehaltene Lichtwellenleiter (1) am Inneneinrichtungsgegenstand angebracht ist, und bei dem an zumindest einem Ende des Lichtwellenleiters (1) eine Lichteinspeiseinrichtung zum Einbringen von Licht in den Lichtwellenleiter (1) vorhanden ist.

2. Inneneinrichtungsgegenstand, wie beispielsweise ein Kraftfahrzeug- oder Flugzeugsitz, eine Instrumentenkonsole, eine Fahrzeugtür-Innenverkleidung oder dgl., bei dem ein zumindest über einen Teil seiner Länge sichtbares Licht emittierender Lichtwellenleiter (1) unter einer Haltenaht (19) zumindest teilweise von außen einsichtbar an dem Gegenstand angenäht ist, und bei dem an zumindest einem Ende des Lichtwellenleiters (1) eine Lichteinspeiseinrichtung zum Einbringen von Licht in den Lichtwellenleiter (1) vorhanden ist.

3. Inneneinrichtungsgegenstand, wie beispielsweise ein Kraftfahrzeug- oder Flugzeugsitz, eine Instrumentenkonsole, eine Fahrzeugtür-Innenverkleidung oder dergleichen, bei dem ein zumindest über einen Teil seiner Länge sichtbares Licht emittierender Lichtwellenleiter (1) selbst zumindest teilweise von außen einsichtbar an dem Gegenstand vernäht ist, und bei dem an zumindest einem Ende des Lichtwellenleiters (1) eine Lichteinspeiseinrichtung zum Einbringen von Licht in den Lichtwellenleiter (1) vorhanden ist.

4. Inneneinrichtungsgegenstand nach Anspruch 1, 2 oder 3, **dadurch gekennzeichnet, daß** die Lichteinspeiseinrichtung eine Leuchtdiode oder eine Laserdiode umfaßt.

5. Inneneinrichtungsgegenstand nach Anspruch 1, **dadurch gekennzeichnet, daß** der in der Befestigungseinrichtung (2, 3) liegende Lichtwellenleiter (1) anstatt eines Rändverstärkungskeders eines Fahrzeugsitzpolsters an der Befestigungsfahne (4) mit eingenäht ist.

6. Inneneinrichtungsgegenstand nach Anspruch 1, **dadurch gekennzeichnet, daß** der Materialstreifen (3) zur Bildung des Hohlteils (2) längs seiner Längserstreckungsrichtung umgefaltet ist und die einander gegenüberliegenden Streifenteile (5, 6) zumindest linienartig miteinander verbunden sind.

7. Inneneinrichtungsgegenstand nach Anspruch 6, **dadurch gekennzeichnet, daß** die linienartige Verbindung (7) der Streifenteile (5, 6) durch zumindest punktartige Verschweißung oder bereichsweise Verklebung erzielt ist.

8. Inneneinrichtungsgegenstand nach Anspruch 1, **dadurch gekennzeichnet, daß** der Materialstreifen (3) eine transparente Folie ist.

9. Inneneinrichtungsgegenstand nach Anspruch 1, **dadurch gekennzeichnet, daß** der Materialstreifen (3) ein Gewebe- oder Fasergeflecht ist.

10. Inneneinrichtungsgegenstand nach Anspruch 1, **dadurch gekennzeichnet, daß** der Materialstreifen (3) ein den Hohlteil (2) und die Befestigungsfahne (4) einstückig aufweisendes Kunststoffteil ist.

11. Inneneinrichtungsgegenstand nach Anspruch 1, 2 oder 3, **dadurch gekennzeichnet, daß** als Lichtwellenleiter (1) eine PMMA-Faser (Polymethylmethacrylat) mit einem Durchmesser zwischen 0,2 - 3,0 mm in das Hohlteil (2) eingebracht ist.

12. Verwendung eines zumindest über einen Teil seiner Länge sichtbares Licht emittierenden Lichtwellenleiters als Dekorfaden zur Erzeugung von Lichteffekten an Inneneinrichtungsgegenständen eines Kraftfahrzeuges durch Anbringen einer Sichtnaht mit dem Lichtwellenleiter (1) als Nahtmaterial.

## Claims

1. Item of interior furnishing, such as, for example, a motor vehicle or aircraft seat, an instrument console, the inner trim of a vehicle door or similar, which has an optical wave guide (1), emitting a visible light over at least part of its length, secured in a mounting device (2, 3), wherein the optical wave guide (1) is located in a strip of material (3) of the mounting device forming a transparent hollow part (2) and the mounting device, seen in cross-section, has a strip part, extending away from the hollow part (2) and serving as a mounting device lug (4), with which the optical wave guide (1) held in the hollow part (2) is attached to the item of interior furnishing, and in which at least at one end of the optical wave guide (1) there is a light input device to feed light into the optical wave guide (1).

2. Item of interior furnishing, such as, for example, a motor vehicle or aircraft seat, an instrument console, the inner trim of a vehicle door or similar, in which an optical wave guide (1) emitting a visible light over at least part of its length is sewn on to the item at least partially visibly from outside by means of a holding seam (19), and in which at least at one end of the optical wave guide (1) there is a light input device to feed light into the optical wave guide (1).

3. Item of interior furnishing, such as, for example, a motor vehicle or aircraft seat, an instrument console, the inner trim of a vehicle door or similar, in which an optical wave guide (1) emitting a visible light over at least part of its length is itself sewn on to the item at least partially visibly from outside, and in which at least at one end of the optical wave guide (1) there is a light input device to feed light into the optical wave guide (1).

4. Item of interior furnishing according to Claim 1, 2 or 3, **characterised in that** the light input device comprises a luminous diode or a laser diode.

5. Item of interior furnishing according to Claim 1, **characterised in that** the optical wave guide (1) located in the mounting device (2, 3) is sewn into the mounting device lug (4) instead of a reinforcement piping of the upholstery of a vehicle seat.

6. Item of interior furnishing according to Claim 1, **characterised in that** the strip of material (3) is folded over along its longitudinal extension direction to form the hollow part (2) and the mutually opposed strip parts (5, 6) are connected at least linearly to one another.

7. Item of interior furnishing according to Claim 6, **characterised in that** the linear connection (7) of the strip parts (5, 6) is achieved by at least spot welding or partial gluing.

8. Item of interior furnishing according to Claim 1, **characterised in that** the strip of material (3) is a transparent foil.

9. Item of interior furnishing according to Claim 1, **characterised in that** the strip of material (3) is a woven fabric or fibre.

10. Item of interior furnishing according to Claim 1, **characterised in that** the strip of material (3) is a plastics material part comprising the hollow part (2) and the mounting device lug (4) in one piece.

11. Item of interior furnishing according to Claim 1, 2 or 3, **characterised in that** a PMMA fibre (polymethylmethacrylate) with a diameter between 0.2 and 3.0 mm is placed into the hollow part (2) as optical wave guide (1).

12. Use of an optical wave guide emitting visible light over at least part of its length as a decorative thread for generating light effects on items of interior furnishing of a motor vehicle by attaching a visible seam with the optical wave guide (1) as seam material.

## Revendications

1. Pièce d'équipement intérieur, comme par exemple un siège de véhicule ou d'avion, une console d'instrument, un revêtement intérieur de portière de véhicule ou autre, qui présente un câble à fibres optiques (1) émettant au moins sur une partie de sa longueur de la lumière visible et qui est fixé dans un dispositif de fixation (2, 3), où le câble à fibres optiques (1) se trouve dans une bande de matériau (3) du dispositif de fixation formant une partie creuse (2) transparente et où le dispositif de fixation, vu en coupe transversale, présente une partie en bande partant de la partie creuse (2) et servant de patte de fixation (4), au moyen de laquelle le câble à fibres optiques (1) contenu dans la partie creuse (2) est amené sur la pièce d'équipement intérieur, et où se trouve un dispositif d'alimentation en lumière destiné à l'alimentation en lumière du câble à fibres optiques (1) sur au moins une des extrémités du câble à fibres optiques (1).

2. Pièce d'équipement intérieur, comme par exemple un siège de véhicule ou d'avion, une console d'instrument, un revêtement intérieur de portière de véhicule ou autre, où un câble à fibres optiques (1) émettant au moins sur une partie de sa longueur de la lumière visible est cousu à la pièce au-dessous d'une couture de maintien (19) visible au moins en partie de l'extérieur, et où un dispositif d'alimentation en lumière destiné à l'alimentation en lumière du câble à fibres optiques (1) se trouve à au moins une des extrémités du câble à fibres optiques (1).

3. Pièce d'équipement intérieur, comme par exemple un siège de véhicule ou d'avion, une console d'instrument, un revêtement intérieur de portière de véhicule ou autre, où un câble à fibres optiques (1) émettant au moins sur une partie de la longueur de la lumière visible est lui-même cousu à la pièce en étant au moins en partie visible de l'extérieur, et où un dispositif d'alimentation en lumière destiné à l'alimentation en lumière du câble à fibres optiques (1) se trouve à au moins une des extrémités du câble à fibres optiques (1).

4. Pièce d'équipement intérieur selon la revendication 1, 2 ou 3 **caractérisée en ce que** le dispositif d'alimentation en lumière comprend une diode électroluminescente ou une diode laser.

5. Pièce d'équipement intérieur selon la revendication 1 **caractérisée en ce que** le câble à fibres optiques (1) se trouvant dans le dispositif de fixation (2, 3) est intégré par couture grâce à la patte de fixation (4) non pas à un bourrelet de renforcement de bord mais à un rembourrage de siège de véhicule.

6. Pièce d'équipement intérieur selon la revendication 1 **caractérisée en ce que** la bande de matériau (3) formant la partie creuse (2) est repliée dans le sens longitudinal et que les parties en bande (5, 6) sont reliées entre elles au moins en formant une ligne.

7. Pièce d'équipement intérieur selon la revendication 6 **caractérisée en ce que** la liaison (7) formant ligne des parties en bande (5, 6) est obtenue par au moins une soudure par points ou par un collage local.

8. Pièce d'équipement intérieur selon la revendication 1 **caractérisée en ce que** la bande de matériau (3) consiste en une feuille transparente.

9. Pièce d'équipement intérieur selon la revendication 1 **caractérisée en ce que** la bande de matériau (3) consiste en un entrelacement en tissu ou en fibre.

10. Pièce d'équipement intérieur selon la revendication 1 **caractérisée en ce que** la bande de matériau (3) consiste en une pièce en matière synthétique présentant en une seule pièce la partie creuse (2) et la patte de fixation (4).

11. Pièce d'équipement intérieur selon la revendication 1, 2 ou 3 **caractérisée en ce qu'**une fibre en PMMA (polyméthacrylate de méthyle) d'un diamètre entre 0,2 et 3,0 mm est introduit dans la partie creuse (2) pour constituer le câble à fibres optiques (1).

12. Utilisation d'un câble à fibres optiques émettant au moins sur une partie de sa longueur une lumière visible en tant que fil décoratif pour créer des effets de lumière sur les pièces d'équipement intérieur d'un véhicule au moyen d'une couture visible avec le câble à fibres optiques (1) servant de matériau de couture.
